# EUROPEAN PATENT APPLICATION

(11) **EP 3 825 256 A1**
(43) Date of publication of application: **26.05.2021**
(21) Application number: 20209150.0
(22) Date of filing: 23.11.2020
(51) Int. Cl.: B65G 1/00, B65G 47/22

(54) **PALLET ALIGNMENT APPARATUS**

(30) Priority: 21.11.2019 GB 201916970
(71) Applicant: Moffett Automated Storage Limited, Monaghan (IE)
(72) Inventor: Moffett, Sam, County Monaghan (IE)
(74) Representative: Schütte, Gearoid

(57) **Abstract**

A pallet alignment apparatus (1) for mounting at rails (2, 3) for a pallet trolley in an automated storage and retrieval system includes a pair of L-shaped pallet engaging elements (4, 5) pivotally mounted at opposite sides of the rails (2, 3) for engagement with opposite sides of a pallet (6) to align the pallet (6) relative to the rails (2, 3). The pallet engaging elements (4, 5) are pivotally movable between an open position for reception of the pallet (6) therebetween and a closed position engaging the opposite sides of the pallet (6) and aligning the pallet (6) with the rails (2, 3). The pallet engaging elements (4, 5) are biased towards the open position. When the pallet trolley drops the pallet (6) onto the open pallet engaging elements (4, 5) they pivot inwardly due to the weight of the pallet (6) into the closed position aligning the pallet (6) with the rails (2, 3).

## Description

### Introduction

This invention relates to a pallet alignment apparatus, in particular for aligning a pallet within an automated storage and retrieval system for the storage and retrieval of goods in a warehouse or distribution centre.

Automated storage and retrieval systems are known which include a 3-dimenionsional lattice framework having a plurality of storage bays for pallets with goods mounted thereon. A rail network extends through the framework and a robotic load handler trolley is movable through the rail network to deliver a load pallet to each storage bay and to retrieve a load pallet from any storage bay. The robotic load handler trolley positions itself beneath a pallet in a storage bay, then lifts the pallet vertically off its supports in the storage bay and takes the pallet along the rail network to the desired location which could be another storage bay or an exit of the automated storage and retrieval system. When a pallet is moved a number of times, it can get out of square. There is only a 50mm overlap between the pallet and the rails. With movement causing misalignment, the pallet can fall within the channel between the rails fouling up the rail system.

The present invention is directed towards overcoming this problem.

WO2014/195901 A1 discloses an example of a storage and retrieval system. EP 2 865 617 A1 discloses a system for positioning a load carrier on a roller conveyor. EP 1 138 572 A2 discloses a movable load carrier with a centering device.

### Statements of Invention

According to the invention, there is provided pallet alignment apparatus for mounting at rails for a pallet trolley in an automated storage and retrieval system, the pallet alignment apparatus including a pair of pallet engaging elements for mounting at opposite sides of the rails for engagement with opposite sides of a pallet to align the pallet relative to the rails, the pallet engaging elements being movable between an open position for reception of a pallet therebetween, and a closed position engaging the sides of the pallet and aligning the pallet with the rails.

In one embodiment of the invention the pallet engaging elements are movable between the open position and the closed position in response to mounting of a pallet thereon between the pallet engaging elements.

In another embodiment the pallet engaging elements are interconnected for synchronous movement between the open position and the closed position.

In another embodiment each pallet engaging element is biased towards the open position.

In another embodiment each pallet engaging element is pivotally movable between the open position and the closed position.

In another embodiment each pallet engaging element has an inwardly facing receiver step for reception of an edge of the pallet.

In another embodiment the receiver step has a bottom face for reception of a bottom face of the pallet at a side edge of the pallet and a side face for engagement against a side face of the pallet at the side edge.

In another embodiment the bottom face of the receiver step is perpendicular to the side face of the receiver step.

In another embodiment each pallet engaging element is pivotally mounted on a support frame which is engagable with the rails.

In another embodiment each pallet engaging element has a counterweight to bias the pallet engaging element towards the open position.

In another embodiment the pallet engaging elements are in alignment at opposite sides of the rails.

In another embodiment the bottom faces of the receiver steps locate within associated cut-out slots at a top of the rails when the pallet engaging elements are in the closed position.

### Brief Description of the Drawings

The invention will be more clearly understood by the following description of some embodiments thereof, given by way of example only, with reference to the accompanying drawings, in which:

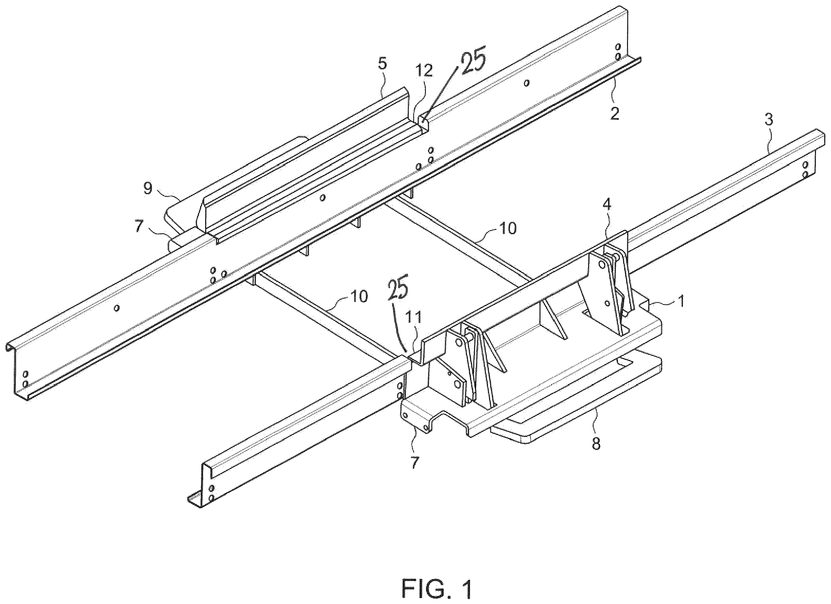

Fig. 1 is a perspective view of a pallet alignment apparatus according to the invention, shown in use mounted at rails for a pallet trolley in an automated storage and retrieval system;
Fig. 2 is a perspective view of the pallet alignment apparatus, shown in another position of use, aligning a pallet on the rails;
Fig. 3 is an elevational view of the pallet alignment apparatus, shown in an open position for reception of a pallet; and
Fig. 4 is an elevational view similar to Fig. 3, showing the pallet alignment apparatus in a closed position aligning the pallet on the rails.

### Detailed Description of the Preferred Embodiments

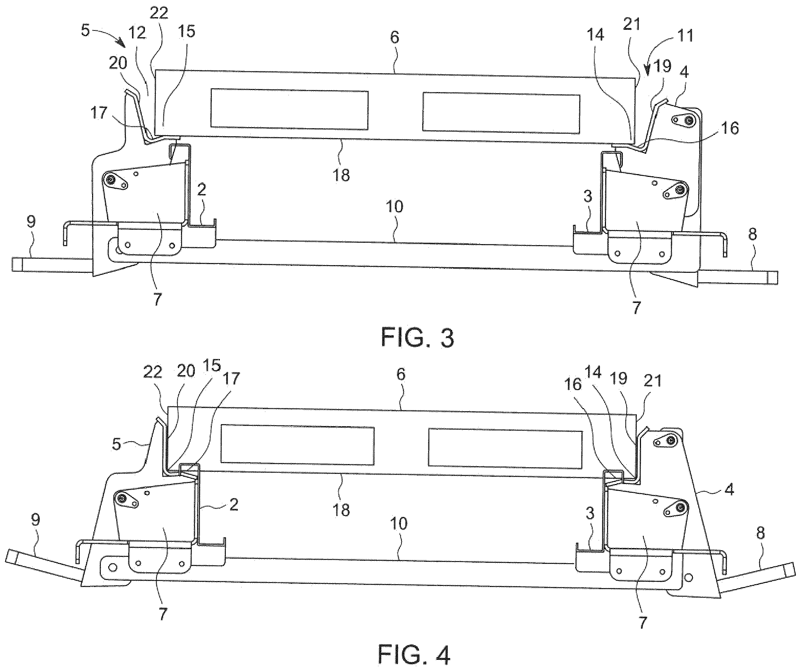

Referring to the drawings, there is illustrated a pallet alignment apparatus according to the invention, indicated generally by the reference numeral 1. The pallet alignment apparatus 1 is for mounting at rails 2, 3 for a pallet trolley in an automated storage and retrieval system. The pallet alignment apparatus 1 includes a pair of pallet engaging elements 4, 5 for mounting at opposite sides of the rails 2, 3 for engagement with opposite sides of a pallet 6 to align the pallet 6 relative to the rails 2, 3. The pallet engaging elements 4, 5 are movable between an open position, as shown in Fig. 3, for reception of a pallet 6 therebetween and a closed position, as shown in Fig. 4, engaging the opposite sides of the pallet 6 and aligning the pallet 6 with the rails 2, 3.

The pallet engaging elements 4, 5 are pivotally mounted on a support frame 7 which is engagable with the rails 2, 3, being bolted to outside faces of each rail 2, 3. Each pallet engaging element 4, 5 is biased towards an open position by a counterweight 8, 9 attached to the pallet engaging element 4, 5. Mounting a pallet 6 on and between the pallet engaging elements 4, 5 causes the pallet engaging elements 4, 5 to pivot on the support frame 7 from the open position shown in Fig. 3 to the closed position shown in Fig. 4. In the closed position shown in Fig. 4, the pallet 6 is correctly aligned with the rails 2, 3 by the apparatus 1.

The pallet engaging elements 4, 5 are in alignment at opposite sides of the rails 2, 3 and are interconnected by tie rods 10 for synchronous pivoting of the pallet engaging elements 4, 5 between the open position and the closed position.

Each pallet engaging element 4, 5 has an inwardly facing receiver step 11, 12 for reception of an outer side edge 14, 15 of the pallet 6. The receiver step 11, 12 has a bottom face 16, 17 for reception of a bottom face 18 of the pallet 6 at a side edge of the pallet 6 and a side face 19, 20 for engagement against a side face 21, 22 of the pallet 6 at the side edge. Each receiver step 11, 12 is L-shaped with the bottom face 16, 17 perpendicular to the side face 19, 20 of the receiver step 11, 12.

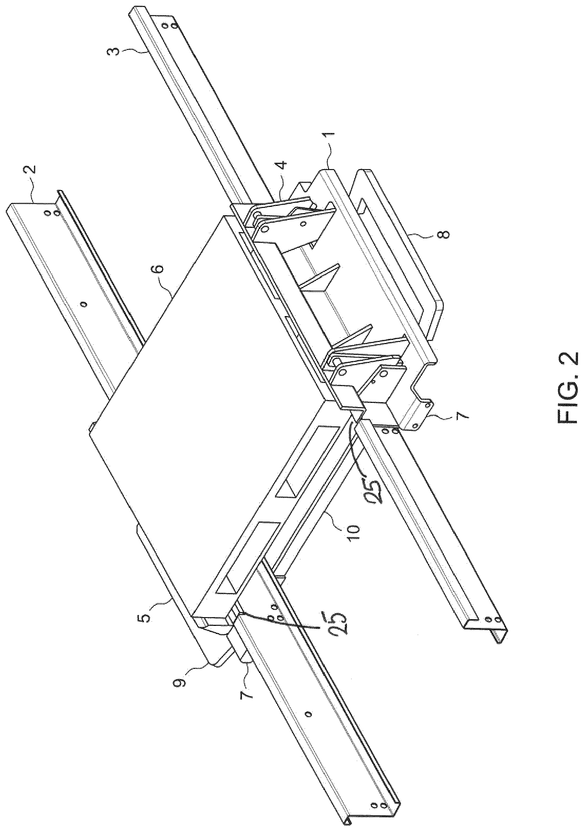

It will be noted that the bottom faces 16, 17 of the receiver steps 11, 12 locate within associated cut-out slots 25 at a top of each rail 2, 3 when the pallet engaging elements 4, 5 are in the closed position, as shown in Fig. 2 and Fig. 4.

In use, when the pallet trolley of the automated storage and retrieval system lifts the pallet 6 a set number of times, for example six times or ten times, it assumes that the pallet 6 is off-square. The next time the pallet trolley lifts the pallet 6, it takes it to the pallet alignment apparatus 1, stopping between the two pallet engaging elements 4, 5. The pallet carrying platform of the pallet trolley is then lowered to drop the pallet 6 onto the receiver steps 11, 12, as shown in Fig. 3. In the open position even a misaligned pallet will readily engage between the pallet engaging elements 4, 5. The weight of the pallet 6 will then pivot the pallet engaging elements 4, 5 on the support frame 7 against the bias of the counterweights 8, 9 pivoting the pallet engaging elements 4, 5 into the closed position shown in Fig. 4. In this position, the bottom face 18 of the pallet 6 rests on the bottom faces 16, 17 of the receiver steps 11, 12 and opposite side faces 21, 22 of the pallet 6 abut the side faces 19, 20 of the receiver steps 11, 12, thus correctly centering and aligning the pallet 6 on the rails 2, 3. The pallet trolley can then be operated to pick up the pallet 6, raising it upwardly off the pallet engaging elements 4, 5 and moving the pallet 6 along the rails 2, 3 to any desired location within the automated storage and retrieval system. When the pallet 6 is raised up off the pallet engaging elements 4, the counterweights 8, 9 pivot the pallet engaging elements 4, 5 back to the open position.

It will be appreciated that the pallet alignment apparatus of the invention has a relatively simple mechanical construction and thus is reliable in operation. It works automatically when a pallet 6 is dropped onto the pallet engaging elements 4, 5 to correctly align the pallet 6 and reverts to the open position automatically upon removal of the aligned pallet 6 ready to receive another pallet 6 for alignment.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. Pallet alignment apparatus (1) for mounting at rails (2, 3) for a pallet trolley in an automated storage and retrieval system, the pallet alignment apparatus (1) including a pair of pallet engaging elements (4, 5) for mounting at opposite sides of the rails (2, 3) for engagement with opposite sides (21, 22) of a pallet (6) to align the pallet (6) relative to the rails (2, 3), the pallet engaging elements (4, 5) being movable between an open position for reception of a pallet (6) therebetween, and a closed position engaging the sides (21, 22) of the pallet (6) and aligning the pallet (6) with the rails (2, 3).

2. The pallet alignment apparatus (1) as claimed in claim 1, wherein the pallet engaging elements (4, 5) are movable between the open position and the closed position in response to mounting of a pallet (6) thereon between the pallet engaging elements (4, 5).

3. The pallet alignment apparatus (1) as claimed in claim 1 or claim 2, wherein the pallet engaging elements (4, 5) are interconnected for synchronous movement between the open position and the closed position.

4. The pallet alignment apparatus (1) as claimed in any preceding claim, wherein each pallet engaging element (4, 5) is biased towards the open position.

5. The pallet alignment apparatus (1) as claimed in any preceding claim, wherein each pallet engaging element (4, 5) is pivotally movable between the open position and the closed position.

6. The pallet alignment apparatus (1) as claimed in any preceding claim, wherein each pallet engaging element (4, 5) has an inwardly facing receiver step (11, 12) for reception of an edge (14, 15) of the pallet (6).

7. The pallet alignment apparatus (1) as claimed in claim 6, wherein the receiver step (11, 12) has a bottom face (16, 17) for reception of a bottom face (18) of the pallet (6) at a side edge (14, 15) of the pallet (6) and a side face (19, 20) for engagement against a side face (21, 22) of the pallet (6) at the side edge (14, 15).

8. The pallet alignment apparatus (1) as claimed in claim 7, wherein the bottom face (16, 17) of the receiver step (11, 12) is perpendicular to the side face (19, 20) of the receiver step (11, 12).

9. The pallet alignment apparatus (1) as claimed in any preceding claim, wherein each pallet engaging element (4, 5) is pivotally mounted on a support frame (7) which is engagable with the rails (2, 3).

10. The pallet alignment apparatus (1) as claimed in any one of claims 4 to 9, wherein each pallet engaging element (4, 5) has a counterweight (8, 9) to bias the pallet engaging element (4, 5) towards the open position.

11. The pallet alignment apparatus (1) as claimed in any preceding claim, wherein the pallet engaging elements (4, 5) are in alignment at opposite sides of the rails (2, 3).

12. The pallet alignment apparatus (1) as claimed in any one of claims 7 to 11, wherein the bottom faces (16, 17) of the receiver steps (11, 12) locate within associated cut-out slots (25) at a top of the rails (2, 3) when the pallet engaging elements (4, 5) are in the closed position.
